Europäisches Patentamt

European Patent Office

Office européen des brevets

(11) Veröffentlichungsnummer: **0 056 267**
**B1**

(12) **EUROPÄISCHE PATENTSCHRIFT**

(45) Veröffentlichungstag der Patentschrift: **12.11.86**

(21) Anmeldenummer: **82100107.0**

(22) Anmeldetag: **09.01.82**

(51) Int. Cl.⁴: **C 08 K 5/00, C 08 K 3/00,**
**C 08 J 9/00, C 09 D 5/18,**
**C 09 K 21/00, B 32 B 5/14**

(54) Flammschutzmittel.

(30) Priorität: **12.01.81 DE 3100626**

(43) Veröffentlichungstag der Anmeldung:
**21.07.82 Patentblatt 82/29**

(45) Bekanntmachung des Hinweises auf die
Patenterteilung:
**12.11.86 Patentblatt 86/46**

(84) Benannte Vertragsstaaten:
**AT BE CH FR GB IT LI LU NL SE**

(56) Entgegenhaltungen:
**DE-A-1 694 334**
**DE-U-7 530 775**
**FR-A-2 340 346**
**US-A-3 737 400**
**US-A-3 897 372**
**US-A-4 126 473**
**US-A-4 216 136**

(73) Patentinhaber: **Schmittmann, Hans-Bernd, Dr.**
**Langenhorster Strasse 30**
**D-5620 Velbert (DE)**
(73) Patentinhaber: **Wiersma, Charles M.**
**4141 Walnut Hills Drive**
**Kentwood Michigan 49508 (US)**
(73) Patentinhaber: **Wiersma, Jack G.**
**4141 Walnut Hills Drive**
**Kentwood Michigan 49508 (US)**

(72) Erfinder: **Schmittmann, Hans-Bernd, Dr.**
**Langenhorster Strasse 30**
**D-5620 Velbert (DE)**
Erfinder: **Thier, Alfons**
**Taunusblick 4**
**D-6365 Rosbach (DE)**

(74) Vertreter: **Patentanwälte Dr. Solf & Zapf**
**Schlossbleiche 20 Postfach 13 01 13**
**D-5600 Wuppertal 1 (DE)**

Courier Press, Leamington Spa, England.

EP 0 056 267 B1

**Beschreibung**

Die Erfindung betrifft ein Flammschutzmittel, das insbesondere als Zusatzmittel für leicht brennbare bzw. normal brennbare und/oder leicht schmelzbare Stoffe, vornehmlich für Kunststoffe, Lacke, Farben, Latex-Produkte, Epoxid-Beschichtungen, Kunstharz-Produkte, Kleber, Preßholz oder dergleichen verwendbar ist.

Beispielsweise werden Baustoffe und Bauteile aus Kunststoff insbesondere für den Innenausbau von umbauten Räumen vielfach eingesetzt. Vielfach werden Wandschutzplatten, Wandschutzleisten, Handläufe oder dergleichen Bauelemente aus halbharten oder weichen, flexiblen und elastischen Kunststoffschäumen zur Abpolsterung von Wänden, Nischen, Wandvorsprüngen, Schwingtoren oder dergleichen, insbesondere in Turn- und Sporthallen oder Krankenhäusern, verwendet. Die Entwicklung hat auf diesem Gebiet zu Baustoffelementen geführt, die in der Regel stoß-, kratz-, abrieb- und bruchfest sowie nahezu unverrottbar, alterungsbeständig gegen Säuren und Laugen und geruchsfrei sind und auch keine Gase entwickeln. Sie können gefärbt sein und geschnitten oder gesägt und mit Spezialklebern auf z. B. Beton, Mauerwerk, Holz oder Putz geklebt werden. Sie sind abwaschbar und pflegeleicht.

Aus den genannten Baustoffen lassen sich auch Schallschluckelemente fertigen, so daß die Baustoffe für den Innenausbau von Räumen sehr vielseitig verwendbar sind. Besonders hervorragende Bauteile in obigem Sinne werden beispielsweise im DE—GM 75 30 775 beschrieben. Diese sind aus einem geschäumten Kunststoffkern mit relativ dichten, dünnen Oberflächenschichten aus dem gleichen Kunststoffmaterial aufgebaut, wobei die Oberflächenschichten bzw. Randzonen mit dem Kern materialverbunden sind. Vorzugsweise kann ein solches Bauelement aus einem halbharten oder weichen, elastischen, flexiblen, geschäumten und verfestigten Polyurethan bestehen, wobei die Oberflächenschichten das gleiche Material, nämlich Polyurethan, aufweisen und bei der Herstellung des Bauelementes in einer Form in an sich bekannter Weise entstehen. Für derartige, aus Polyurethanschaum hergestellte Bauelemente ist noch hervorzuheben, daß sie ganz ausgezeichnete Wärmedämmeigenschaften besitzen.

Die beschriebenen Baustoffe können selbstverständlich auch zur Abpolsterung, zum Schutz oder zur Dekoration oder dergleichen für andere Elemente wie z. B. Möbel oder Gebrauchsgeräte oder dergleichen verwendet werden und dabei die gleichen oder ähnliche Aufgaben erfüllen. Insofern wird im Rahmen der Erfindung der Begriff "Baustoff" nicht beschränkt, sondern umfaßt ganz allgemein schwerentflammbare Kunststoffe, vorzugsweise verschäumte Kunststoffe, die vornehmlich als Baustoffe im beschriebenen Sinne zum Einsatz kommen, jedoch auch für technisch gleichwertige Zwecke verwendbar sind. Im folgenden wird jedoch das Problem mit dem sich die Erfindung befaßt, im Schwerpunkt in bezug auf die Baustoffe dargestellt.

Die Verwendbarkeit der Baustoffe kann in Fällen problematisch sein, in denen z. B. ein schwerentflammbarer Baustoff nach DIN 4102 Baustoffklasse B1 gefordert wird. Nach DIN 4102 wird das Brandverhalten von Baustoffen und Bauteilen genormt, wobei die Baustoffe in zwei Hauptklassen eingeteilt werden. Die Hauptklasse A betrifft nichtbrennbare Stoffe. Die Hauptklasse B beinhaltet dagegen die brennbaren Baustoffe. Die Baustoffe, mit denen sich die vorliegende Erfindung befaßt, zählen zur Baustoffklasse B. Diese Klasse wird nach der Norm wiederum unterteilt in die folgenden Unterklassen:

B1 Schwerentflammbare Baustoffe
B2 Normalentflammbare Baustoffe
B3 Leichtentflammbare Baustoffe

Die beschriebenen, bekannten Baustoffe zählen in der Regel zu den leicht-oder normal entflammbaren Baustoffen und werden somit den Klassen B3 und B2 zugerechnet. Lediglich wenige Kunststoff-Baustoffe sind schwerentflammbar (Klasse B1) oder sogar nichtbrennbar (Klasse A).

Zweck der Erfindung ist, leichtentflammbare und/oder normalentflammbare Stoffe schwerentflammbar zu machen, so daß insbesondere die daraus hergestellten Bauteile bzw. Bauelemente ggf. sogar den Bedingungen der Norm DIN 4102 genügen und in die Klasse B1 eingereiht werden können.

Es ist bekannt, daß Baustoffe aus Kunststoff, insbesondere aus Polyurethankunststoffschäumen, schwerentflammbar gemacht werden können, wenn als Füllstoff Asbest verwendet wird. Die Verarbeitung von Asbest ist jedoch wegen der Asbestosegefahr z. T. verboten, so daß die Verwendung der mit Asbest versetzten Baustoffteile in Kürze nicht mehr erlaubt sein wird. Zudem verursacht der Füllstoff eine Verhärtung des Kunststoffschaums, so daß einige gewünschte Eigenschaften wie z. B. Flexibilität, Elastizität der Bauteile verlorengehen können. Versuche, andere feuerfeste Füllstoffe oder Fasern zu verwenden, sind bisher fehlgeschlagen. Die Produkte entsprachen allesamt nicht den Anforderungen der Norm DIN 4102.

Es ist ferner bekannt, daß durch den Zusatz einer Chemikalie die Entflammbarkeit von Kunststoffen erschwert werden kann. Beispielsweise werden Phosphate oder Borate verwendet, die der Kunststoffmasse zugemischt werden. Diese Maßnahmen führen zwar zu einer schwereren Entflammbarkeit, die aber nicht so erheblich ist, daß die Anforderungen an die Baustoffe, z. B. die Bedingungen der Norm DIN 4102, erfüllt werden. Es sind allenfalls Baustoffe der beschriebenen Art herstellbar, die der Klasse B2 genügen.

Aus der US—PS 3 737 400 ist bekannt, Polyurethanschaum mit Ammoniumsulfat zu versetzen. Ein weiterer Vorschlag sieht vor, Ammoniumsulfat im Gemisch mit Aluminiumhydroxid zu verwenden. Darüber hinaus wird vorgeschlagen, Ammoniumsulfat und/oder dem Gemisch, bestehend aus Ammoniumsulfat und Aluminiumhydroxid, zumindest eine der folgenden Verbindungen zuzusetzen: KCl, $K_2O$, $KNO_3$, $Ca(OH)_2$, $Mg(OH)_2$, $K_2SO_4$ und $Ba(OH)_2$. Das Zusatzmittel soll zur Selbstverlöschung der Flammen dienen (nicht schwer entflammbar, sondern selbstverlöschend).

Zudem sind aus der DE—OS 23 59 700 flammfeste Polyurethane und Polyurethanschäume bekannt, die als Flammschutzmittel ein besonderes Ammoniumpolyphosphat enthalten. Ferner ist aus der DE—OS 23 48 838 ein Verfahren zur Herstellung von flammenbeständigen isocyanuratgruppenhaltigen Polyurethankunststoffen bekannt, wobei die Flammenbeständigkeit durch einen Zusatz von Melamin verbessert wird. Schließlich ist aus den japanischen Anmeldungen 75154368 und 7463648 bekannt, flammfeste Polyurethanschäume durch Zumischen der anorganischen kristallwasserabspaltenden Verbindungen Borax und Natriumsilikat herzustellen.

Der Zusatz dieser Stoffe kann letztlich nicht die Schwerentflammbarkeit gemäß DIN 4102 gewährleisten, weil die Wirkung der Stoffe, die selbst im Gemisch einstoffig wirken, bei Einwirkung von Wärme schnell verbraucht ist und nach Verbrauch die Feuerwiderstandsfähigkeit bzw. die Schwerentflammbarkeit verlorengeht, z. B. durch Aufheizung des Kunststoffes unter der Erhitzungszone und dadurch erfolgendes Abschmelzen von ggf. gebildeten Schutzschmelzen oder Ascheschutzschichten.

Auch Flammschutzmittel, bestehend aus einem Gemisch mehrerer Komponenten, z. B. aus einem Gemisch aus Natriumtetraborat und Ammoniumphosphat für ein Epoxidharz (FR—A—23 40 346) sind nicht geeignet, den Kunststoff schwer entflammbar zu machen, obwohl das Gemisch des Flammschutzmittels endotherm bei hohen Temperaturen reagieren soll.

Selbst der Polyurethanschaum nach der US—A—3 897 372, dem bei der Herstellung Aluminiumhydrat in Kombination mit Borsäure und einer Melaminverbindung zugesetzt worden ist, ist nicht in der Lage, den in der Norm gestellten Bedingungen zu genügen.

Des weiteren ist aus der US—A—4 126 473 eine Zusammensetzung für ein Flammschutzmittel für zellulosehaltige Produkte bekannt, das synergistisch wirken soll und drei Komponenten enthält, nämlich ein aluminiumhaltiges Material, ein in der Natur vorkommendes Borat enthaltendes Mineral und ein Phosphat- oder Sulfatsalz. Zudem ist aus der US—A—4 216 136 ein Produkt bekannt, das aus einem verstärkten synthetischen Harz besteht, dem ein Epsomsalz und Boraxhydrat und Glasfasern beigemengt sind und das als Überzugsmaterial oder für geformte Körper verwendbar ist. Die beschriebenen bekannten Produkte sind nicht schwer entflammbar, obwohl die Zusatzmittel in einigen Fällen energieaufbrauchende Veränderungen erfahren sollen (z.B. US—A—4 216 136 und FR—A—23 40 346).

Aufgabe der Erfindung ist, Flammschutzmittel zu schaffen, die insbesondere zur Herstellung schwer entflammbarer, vorzugsweise verschäumter, Kunststoffe verwendbar sind, wobei insbesondere daraus hergestellte Baustoffe und Bauteile der Klasse B1 nach DIN 4102 genügen sollen, ohne daß die gewünschten vorteilhaften Eigenschaften des Kunststoffes wesentlich beeinträchtigt werden oder verlorengehen.

Diese Aufgabe wird durch ein Flammschutzmittel gelöst, das im wesentlichen aus der im Anspruch 1 angegebenen Kombination besteht. Die angegebenen chemischen Verbindungen sollen eine Folge fraktionierter, endothermer Reaktionen bei der Einwirkung von Wärme bzw. hohen Temperaturen eingehen. Vorzugsweise ist vorgesehen, daß fraktioniert Schmelzen und/oder fraktioniert Zersetzungsprodukte und/oder fraktioniert Reaktionsprodukte und/oder fraktioniert Ascheprodukte gebildet werden. Dabei soll die erste endotherme Reaktion zweckmäßigerweise unter dem Schmelzpunkt und/oder Entflammungspunkt des Stoffes beginnen, dem es zugesetzt worden ist.

Unter dem Begriff "fraktioniert" wird im Sinne der Erfindung ein temperaturabgestuftes Reaktionsverhalten des Stoffes, z. B. ein Schmelzen, verstanden, bei dem sich bei unterschiedlichen Temperaturen z. B. Schmelzphasen aus zumindest einem Bestandteil des Mittels bilden. Die Schmelzphasen oder anderen Phasen, die sich temperaturabgestuft bzw. bei unterschiedlichen Temperaturen einstellen, entstehen durch endotherme Reaktionen. Ebenso handelt es sich bei den Zersetzungsreaktionen und den Reaktionen zur Bildung neuer Verbindungen oder Phasen, oder der Veraschung um endotherme Prozesse, die Wärme verbrauchen. Die endothermen Reaktionen sollen vorzugsweise nacheinander ablaufen, insoweit, als sich z. B. ein Zersetzungsprodukt bei 90°C bildet unter Verbrauch einer bestimmten Wärmemenge. Wenn das Zersetzungsprodukt sich nahezu mengenmäßig vollständig gebildet hat, steigt die Temperatur im Baustoff bzw. in der Zersetzungszone an. Bei Erreichen beispielsweise von 100° C entsteht eine Schmelzphase, vornehmlich in der Zersetzungszone, die wiederum endotherm entsteht und sich so lange bilden kann, wie die schmelzenden Stoffe im Baustoff bzw. in der Zersetzungszone zur Verfügung stehen. Danach steigt die Temperatur in der Reaktionszone wieder an, bis die nächste vorgesehene endotherme Reaktion stattfindet, die eine Phasenänderung, z. B. eine Feststoffreaktion, sein kann. Die endothermen Reaktionen können selbstverständlich auch sämtlich Schmelzprozesse oder Feststoff- oder Zersetzungsreaktionen sein; es kommt dabei lediglich darauf an, daß die erforderlichen Temperaturen zur Initiierung der Prozesse der Höhe nach abgestuft sind und ausreichend Wärmeenergie verbraucht wird, so daß der Baustoff oder dergleichen unter oder hinter bzw. im Bereich der Reaktionszone nicht so weit aufgeheizt wird, daß durch das Schmelzen z. B. des Kunststoffes die Reaktionszone, die als Schutzzone wirkt, abfließt oder abrutscht oder abschwimmt. Ein Baustoff z. B. erfüllt dann ohne weiteres die Bedingungen der Norm DIN 4102 für die Klasse B1 und hält auch in der Praxis hohen Temperaturen eine bestimmte Zeit lang stand.

Die Erfindung sieht bevorzugt vor, anorganische Salze zu verwenden, die die fraktionierten Reaktionen gewährleisten, z. B. durch Schmelzenbildung bei vorbestimmten Temperaturen und durch Verbrauch von relativ viel Wärmeenergie. Die Salze können aber auch Verbindungen mit dem Stoff, dem sie zugesetzt worden sind, eingehen (ggf. nach Art einer Legierung), wobei die Verbindungsbildung unter hohem Wärmeverbrauch erfolgt und/oder die Verbindung selbst unter hohem Wärmeverbrauch schmilzt.

Bei der Erfindung haben sich Phosphate und/oder Borate als geeignet erwiesen. Besonders effektiv sind Mischungen, die Ammoniumphosphat und Ammoniumpolyphosphat sowie Borax und wasserfreien Borax enthalten. Anstelle von oder in Kombination mit Borax, das in der Regel als Decahydrat vorliegt, können auch Boraxpentahydrat oder andere Boraxhydrate sowie Borsäure verwendet werden. Ferner hat sich gezeigt, daß auch Harnstoffpolymerisate oder -derivate wie Cyanuramid, Cyanurdiamid, Dicyandiamid, vorzugsweise Cyanursäuretriamid (Melamin), in Kombination mit den Salzen besonders gute Ergebnisse bringen, wobei zudem auch noch Harnstoff zugegeben werden kann. Gegebenenfalls können auch Oxalate, Oxalsäure und deren Salze, Tartrate, Teer, Bitumen, Weinsäure und deren Salze als besonders wirksame Aschebildner zugesetzt werden.

Die Erfindung läßt sich in hervorragender Weise bei Baustoffen aus halbharten bis weichen Polyurethanschäumen verwirklichen. Die Verwendung derartiger Schäume als Baustoff für Bauteile für den Innenausbau von Räumen ist bekannt (DE—GM 75 30 775).

Eine besonderes geeignete Rezeptur für den Baustoff weist die folgenden Komponenten auf:

48 bis 58, vorzugsweise 50 bis 55 Gew.-% Polyol

17 bis 22, vorzugsweise 18 bis 20 Gew.-% Isocyanat (Härter)

0 bis 1, vorzugsweise 0,2 bis 0,6 Gew.-% Beschleuniger, z. B. DBTL

15 bis 50, vorzugsweise 20 bis 30 Gew.-% Treibmittel (Arkton)

Beim Zusammenmischen dieser Stoffe entsteht bekanntlich eine sogenannte halbharte Schaumstruktur mit einer relativ dichten Außenhaut. Führt man das Schäumen in einer allseits abgestützten Form durch, so entstehen Bauteile mit einem Schaumstoffkern und relativ dichten Oberflächenschichten (DE—GM 75 30 775).

Die Zusatzstoffe werden dem Polyol in Mengen von 100 bis 300, vorzugsweise von 180 bis 220 Gew.-%, bezogen auf das Polyol, zugemischt. Dann werden der Vormischung die anderen Reaktionspartner zugegeben und das Gemenge in der üblichen Weise verarbeitet. Bevorzugt wird dabei eine Zusatzstoffkombination, bestehend aus Ammoniumpolyphosphat, Monoammonphosphat, Borax, wasserfreiem Borax und Melamin.

min. Die Zugabemengen richten sich jeweils nach den Korngrößenspektren und den gewünschten endothermen Reaktionswärmen, wobei die Zusatzmenge an Ammoniumpolyphosphat und wasserfreiem Borax so gewählt werden, daß diese Stoffe als Keimbildner für die Reaktionsprodukte aus Monoammonphosphat und Borax wirken und die gewünschten reaktionen begünstigen bzw. ungewollte Reaktionen verhindern. Die Wirkung dieser Stoffe schon in geringen Mengen möglicherweise als Keimbildner und/oder Katalysatoren oder dergleichen ist überraschend. Ihr Zusatz führt zu besonders guten Ergebnissen in Kombination mit den anderen angegebenen Stoffen.

Besonders zweckmäßig ist, die Zusatzstoffe für das Flammschutzmittel in folgenden Mengen, bezogen auf die Gesamtmenge der Zusatzstoffe, zu verwenden:

2 bis 10, vorzugsweise 5 bis 8 Gew.-% Ammoniumpolyphosphat

10 bis 50, vorzugsweise 30 bis 40 Gew.-% Monoammonphosphat

4 bis 12, vorzugsweise 7 bis 10 Gew.-% Borax, wasserfrei

12 bis 40, vorzugsweise 20 bis 30 Gew.-% Borax

12 bis 40, vorzugsweise 20 bis 30 Gew.-% Melamin

0 bis 20, vorzugsweise 5 bis 10 Gew.-% Harnstoff

Die Dispergierung des Flammschutzmittels im Stoff, z. B. im Kunststoff, der schwerentflammbar gemacht werden soll, ist nach einer weiteren Ausführungsform der Erfindung durch Zugabe pyrogener, hydrophober, insbesondere silikonisierter Kieselsäure sehr gut. Es ist aber auch vorteilhaft, ein Silan oder Silikon einzumischen oder ein Stearat oder ein anderes Hydrophobierungsmittel zuzusetzen. Die Kieselsäure wird vorzugsweise im Mengen von 0,1 bis 2,5 Gew.-%, bezogen auf die Zusatzstoffmenge, zugesetzt. Die Hydrophobierung dient neben einer erheblichen Verbesserung der Dispergierbarkeit auch zur Verbesserung der Rieselfähigkeit der Zusatzstoffe beim Einmischen und zur Verbesserung der Haltbarkeit bei der Lagerung.

Eine weitere erfindungsgemäße Verfahrensvariante sieht vor, vorzugsweise reaktionsneutrale Verdünnungsmittel, beispielsweise Alkohole, vorzugsweise N-Butanol oder Methylenchlorid, bis zu etwa 50 Gew.-% zuzusetzen, so daß durch eine Verflüssigung die Verarbeitbarkeit des Gemisches verbessert wird. Dadurch kann auch die Struktur und Beschaffenheit, z. B. die Elastizität eines Kunststoffes, beeinflußt werden. Methylenchlorid dient dabei in vorteilhafter Weise auch als Treibmittel, wenn das Flammschutzmittel einer Mischung zur Herstellung von Polyurethankunststoffschaum zugesetzt wird.

Ein unter Verwendung des neuen Flammschutzmittels hergestellter schwerentflammbarer Polyurethankunststoffschaum eignet sich insbesondere zur Herstellung von plattenförmigen Abpolsterungsbauteilen, Handläufen, Schallschluckplatten nach DE—GM 75 30 775 und

Wandschutzleisten. Die Eingenschaften des neuen Baustoffes sind gegenüber den Eigenschaften des bekannten Baustoffes bis auf die Entflammbarkeit weitgehend unverändert geblieben; die Zusatzstoffe haben keinerlei erhebliche, negative Einflüsse verursacht. Die Struktur des neuen Baustoffes der Bauteile ist gekennzeichnet durch das Vorhandensein der Zusatzstoffe des Flammschutzmittels in den Feststoffstegen und den Oberflächenschichten. Die Zusatzstoffe sind analysierbar und daher ausreichend individualisiert. Die Stoffwahl bedingt in überraschender Weise die besondere Verwendbarkeit der Bauteile als schwerentflammbare Bauelemente.

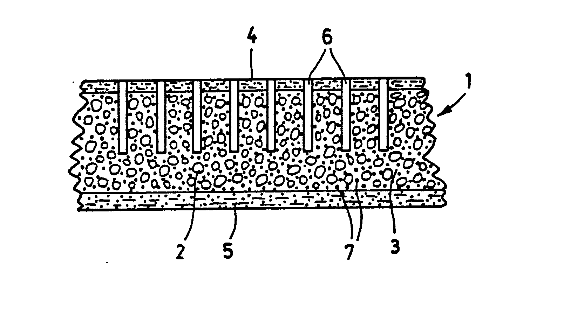

Anhand der Zeichnung wird ein erfindungsgemäßes Bauteil beispielhaft näher erläutert. Die Abbildung zeigt einen Teil einer Abpolsterungsplatte, die insbesondere auch beachtliche Schalldämmeigenschaften besitzt.

Die Platte weist einen hochelastischen Kern 1 aus geschäumtem Polyurethan auf, der aus überwiegend geschlossenen Kugelporen 2 und den Feststoffstegen 3 besteht. Die Oberflächenschichten 4 und 5 sind relativ dicht strukturiert, bestehen ebenfalls aus Polyurethan und sind mit dem Kern 1 einstückig materialverbunden. Durch die Oberflächenschicht 4 können Löcher 6 bis in den Kern 1 eingestanzt oder eingebohrt oder dergleichen sein, die zur Schallabsorption dienen.

Wesentlich ist, daß die Feststoffstege 3 die Zusatzstoffe enthalten, die schematisch als Punkte 7 gezeichnet sind.

Die Erfindung soll im folgenden durch Beispiele verdeutlicht werden.

### Beispiel 1

Einer Grundmischung, bestehend aus
53,0 Gew.-% Polyol
20,0 Gew.-% Isocyanat
0,4 Gew.-% Beschleuniger
26,6 Gew.-% Treibmittel,
aus der Schaumstoffbauteile herstellbar sind, die nicht den Bedingungen der Klasse B1 nach DIN 4102 entsprechen, wurden folgende Zusatzstoffe beigemengt, wobei die Zusatzstoffe dem Polyol zugegeben wurden:
7 Gew.-% Ammoniumpolyphosphat
35 Gew.-% Monoammonphosphat
25 Gew.-% Borax
8 Gew.-% Borax, wasserfrei
25 Gew.-% Melamin
Das Schäumen erfolgte in einer allseits abgestützten Form, so daß Abpolsterungsplatten mit den Abmessungen 100 cm × 19 cm × 2 cm entstanden. Vier Platten wurden den Prüfungsbedingungen gemäß DIN 4102, Teil 1, Punkt 6.1.2 unterworfen mit dem Ergebnis, daß die Restlänge im Mittel etwa 17 cm betrug und lediglich eine maximale Rauchgastemperatur von 139° C bis zur zehnten Minute auftrat, so daß die Bedingungen für einen Baustoff B1 nach DIN 4102 voll erfüllt waren.

### Beispiel 2

Die Zusammensetzung des Polyurethanschaums und des Flammschutzmittels ist die gleiche wie im Beispiel 1. Jedoch beträgt die Menge des Flammschutzmittels 29%. Der daraus resultierende Polyurethanschaum konnte in die Klasse I entsprechend der ASTM-Norm (Butler-Chimney-Test) eingereiht werden. Während des Tests wurde die Probe in einen Zylinder gespannt und einer Bunsenbrennerflamme mit 700° F (370° C) ausgesetzt. Nach der Beflammung wurde das Material entfernt und folgendes gemessen:

1. Die Höhe der Flamme im Schornstein, nachdem der Brenner weggenommen worden war.
2. Der Rauchgehalt, nachdem der Brenner weggezogen worden war.
3. Der Gewichtsverlust der Probe, nachdem die Flamme erloschen war.

### Beispiel 3

Die Materialien gemäß Beispiel 1 und 2 wurden wieder verwendet, jedoch lediglich mit 20% Flammschutzmittel versetzt. Das Material war in die Klasse II nach ASTM-Norm einzureihen.

### Beispiel 4

Etwa 20% des Flammschutzmittels wurden in eine Epoxid-Beschichtungsmasse eingeführt. Anschließend wurde ein Film auf ein Substrat aufgetragen und der Film erhärtet. Das beschichtete Subustrat wurde anschließend an das eine Ende eines Tunnels plaziert und dann mit einer Flamme und Zugluft beaufschlagt, um zu bestimmen, wie weit die Flamme sich von der Epoxid-Beschichtung in den Tunnel hinein erstrecken würde. Es entstand keine Flammenerstreckung. Es ergab sich außerdem eine drastische Reduktion des Rauches und praktisch keine Entgasung, wie das beispielsweise bei der Verwendung von bromhaltigen Chemikalien der Fall ist.

### Beispiel 5

Das Verfahren gemäß Beispiel 4 wurde wiederholt mit einer Polyester-Beschichtung, die etwa 20% des Flammschutzmittels gemäß Beispiel 1 enthielt. Das Polyestermaterial wies eine typische Glasfaserverstärkung auf. Während der Testperiode ergab sich wiederum keine Flammenerstreckung.

### Beispiel 6

Ein flexibler Urethanschaum mit 29 Gew.-% Flammschutzmittel gemäß Erfindung wurde über einen Bunsenbrenner 10 Sekunden lang gehalten und dann aus der Flamme entfernt. Es sollte die Zeit bis zum Selbsterlöschen gemessen werden. Die Probe entflammte jedoch nicht. Es ergab sich überhaupt kein Brennvorgang.

### Beispiel 7

Das Verfahren gemäß Beispiel 6 wurde wiederholt, wobei jedoch ein relativ steifer Polyurethanschaum verwendet wurde. Die Probe entzündete sich während der Beflammung. Das Brennen hörte jedoch sofort auf, nachdem die Bunsenbrennerflamme entfernt worden war.

### Beispiel 8

Es wurde ein Stück, bestehend aus einem flexiblen Polyurethanschaum mit 29 Gew.-% Flammschutzmittel, in einen Zylinder gebracht, der mit Stickstoff durchspült wurde. Dann wurde eine Flamme über das Produkt gehalten und Sauerstoff eingeführt, bis eine Entflammung erfolgte. Normalerweise ist ein Kunststoffmaterial wie beispielsweise ein flexibler Kunststoffschaum akzeptabel in bezug auf die Flammfestigkeit, wenn sich ein Meßwert von 17 auf der entsprechenden O.I. Testskala ergibt. Die flexible Schaumprobe entflammte nicht.

### Beispiel 9

Der O.I. Test des Beispiels 8 wurde wiederholt mit einer steifen Polyurethanprobe, die ebenfalls etwa 29 Gew.-% Flammschutzmittel gemäß Erfindung enthielt. Eine Entflammung erfolgte so lange nicht, bis der Sauerstoffpegel etwa 36 auf der O.I. Testskala erreicht wurde.

### Beispiel 10

Eine Probe aus flexiblem Polyurethanschaum mit etwa 29 Gew.-% Flammschutzmittel gemäß Erfindung wurde einem "Radiant Panel Test" unterworfen. Bei diesem Test wird eine Platte auf 1000° F (540° C) erhitzt und eine Probe des Schaumstoffs vor die Platte 10 Minuten lang plaziert. Anschließend wird die Probe mit drei kleinen Propangasflammen bei etwa 1700° F (925° C) beaufschlagt. Danach wird bestimmt, wie lange es dauert, bis sich die Verbrennung der Probe stabilisiert. Ferner wird der Grad der Rauchemission und die Menge der unverbrannten Probe bestimmt. Optimale frühere Ergebnisse ergaben, daß das Material mit anderen Flammschutzsystemen nach 10 Minuten sich stabilisierte und zu 100% aufgrund Verbrennung verbraucht war. Die mit dem erfindungsgemäßen Flammschutzmittel versetzte Probe stabilisierte sich nach 15 Minuten, wonach immer noch ein Rest von etwa 50% des unbeschädigten Schaumstoffes übriggeblieben war.

### Beispiel 11

Es wurde eine Epoxid-Beschichtung mit 20 Gew.-% Flammschutzmittel gemäß Erfindung hergestellt. Ein Substrat wurde daraufhin beschichtet und die Beschichtung — wie üblich — bei hohen Temperaturen von 450° F (232° C) ausgehärtet. Das Epoxid entzündete sich oder veränderte sich in keiner Weise während der Erhärtung. Nach der Erhärtung wurde die Probe auf 550° F (290° C) in einem Ofen für 20 Minuten erhitzt. Es erfolgte keine Entzündung und auch keine Degradation.

Die Beispiele zeigen, daß das neue Flammschutzmittel geeignet ist, leicht und normal entflammbare Stoffe flammfest zu machen. Dabei hat sich herausgestellt, daß es zweckmäßig ist, das als Flammschutzmittel verwendete Gemisch feingemahlen zu verwenden, und zwar möglichst im Korngrößenbereich unter 100 µm. Das neue Flammschutzmittel gewährleistet die Flammfestigkeit über einen weiten Temperaturbereich aufgrund der fraktionierten, endothermen Reaktionen. Es ist auch ausprobiert worden als Zusatzmittel zu Latex-Beschichtungen, wobei sich die gleichen oben in den Beispielen beschriebenen Ergebnisse ergaben. Zudem hat sich herausgestellt, daß das erfindungsgemäße Mittel teilweise Füllstoffe in Kunststoffen oder Beschichtungen ersetzen kann. Es kann zudem auch andere Stoffe teilweise ersetzen wie z. B. Verdickungsmittel in Latex-Beschichtungen.

Die Wirkung des neuen Flammschutzmittels kann sich — wie folgt — einstellen. Die Zugabe von 20 Gew.-% zum Polyol zur Herstellung eines Polyurethanschaums bewirkt ein Produkt, das der Klasse II nach ASTM entspricht. Mit einem Zusatz von 29 Gew.-% wird die Klasse I erreicht. Weitere Zugabemengen erhöhen nicht wesentlich die Flammfestigkeit, können jedoch aus anderen Gründen wünschenswert sein, z. B. zur Erhöhung des Füllstoffgehalts, zur Erhöhung des Andickens, zur Erhöhung der Steife usw. In Epoxid-Beschichtungen dient insoweit — wie bereits erwähnt — das Flammschutzmittel als Verdickungsmittel und kann sogar ausschließlich als Verdickungsmittel verwendet werden. Für die Verwendung in Polyurethanschäumen ist eine Zusatzmenge von 20 bis 64 Gew.-% zweckmäßig. Für andere Produkte waren 15 bis 20 Gew.-% des Flammschutzmittels bereits ausreichend effektiv. Epoxid-Beschichtungen sind ein Beispiel für die Verwendung derart geringer Mengen.

Nach einer besonderen Ausführungsform der Erfindung werden in Kunststoffprodukte oder dergleichen Produkte, die keine offene Zell- oder Porenstruktur aufweisen, Löcher eingebracht, die mit der Oberfläche der Produkte in Verbindung stehen bzw. an der Oberfläche der Produkte auslaufen. Die Löcher verhindern ein Aufblähen während der Beflammung und ermöglichen flüchtigen Bestandteilen, aus der Masse des Produktes als Gas zu entweichen. Löcher sind insbesondere dann wichtig, wenn z. B. ein Kunststoff-Bauteil mit einer geschlossenen Überzugsschicht überzogen ist.

Eine weitere Ausführungsform der Erfindung sieht vor, daß das Flammschutzmittel als solches ggf. mit einem organischen oder anorganischen Bindemittel versetzt als Beschichtung verwendet wird. Es ergeben sich dabei die gleichen Wirkungen wie bei der Verwendung als Zusatzmittel.

Es ist überraschend, daß die Beimengung von Salzen und den anderen angegebenen Stoffen zu Reaktionen bei der Einwirkung von hohen Temperaturen führt, die offenbar höhere Wärmemengen verbrauchen als die Zusatzstoffmengen zum Schmelzen bzw. Zersetzen oder dergleichen benötigen und daß dadurch die Schwerentflammbarkeit erzielt werden kann. Eine Erklärung für diese unerwartete Eigenschaft ist derzeit noch nicht erkennbar; denn z. B. die Schmelzpunkte bzw. Zersetzungspunkte einiger angegebener Zusatzstoffe liegen weit höher als die Temperaturstufe, bei der die entsprechenden fraktionierten Reaktionen nach der Erfindung einsetzen.

## Patentansprüche

1. Flammschutzmittel, insbesondere als Zusatzmittel für leicht oder normal entflammbare Stoffe, wie. z.B. Kunststoffe, Lacke, Farben, Latexprodukte, Kunstharzprodukte, Kleber, Preßholz, Epoxidbeschichtungen oder dgl., bestehend aus einem Chemikaliengemisch, dadurch gekennzeichnet, daß es aus einer Kombination von
   a) Phosphaten,
   b) wasserfreiem Borax,
   c) wasserhaltigem Borax wie Boraxdecahydrat, Boraxpentahydrat oder Borsäure und
   d) Melamin, Cyanuramid, Cyanurdiamid oder Dicyandamid besteht.

2. Flammschutzmittel nach Anspruch 1, dadurch gekennzeichnet, daß das Gemenge mengenmäßig so zusammengestellt ist, daß sich in einem großen Temperaturbereich eine fraktionierte endotherme Reaktion bei der Einwirkung von Wärme bzw. hohen Temperaturen ergibt.

3. Flammschutzmittel nach Anspruch 2, dadurch gekennzeichnet, daß die fraktionierten Reaktionen Schmelz- und/oder Zersetzungs- und/oder Verbindungsbildungs- und/oder Aschebildungsreaktionen sind.

4. Flammschutzmittel nach einem oder mehreren der Ansprüche 1 bis 3, dadurch gekennzeichnet, daß es Harnstoff enthält.

5. Flammschutzmittel nach einem oder mehreren der Ansprüche 1 bis 4, gekennzeichnet durch die folgenden Zusammensetzung:
   2 bis 10, vorzugsweise 5 bis 8 Gew.-% Ammoniumpolyphosphat
   10 bis 50, vorzugsweise 30 bis 40 Gew.-% Monoammonphosphat
   4 bis 12, vorzugsweise 7 bis 10 Gew.-% Borax, wasserfrei
   12 bis 40, vorzugsweise 20 bis 30 Gew.-% Borax
   12 bis 40, vorzugsweise 20 bis 30 Gew.-% Melamin
   0 bis 20, vorzugsweise 5 bis 10 Gew.-% Harnstoff.

6. Flammschutzmittel nach einem oder mehreren der Ansprüche 1 bis 5, dadurch gekennzeichnet, daß es pyrogene, silikonisierte Kieselsäure enthält.

7. Verwendung des Flammschutzmittels nach einem oder mehreren der Ansprüche 1 bis 6 zur Herstellung schwer entflammbarer Kunststoffe.

8. Verwendung nach Anspruch 7 zur Herstellung eines schwer entflammbaren Polyurethanschaums unter Verwendung von Polyol, Isocyanat, einem Beschleuniger und Treibmitteln, dadurch gekennzeichnet, daß Polyol mit dem Flammschutzmittel vorgemischt wird.

9. Verwendung nach Anspruch 8, dadurch gekennzeichnet, daß der Vormischung pyrogene, silikonisierte Kieselsäure zugesetzt wird.

10. Verwendung nach Anspruch 8 und/oder 9, dadurch gekennzeichnet, daß ein Alkohol, vorzugsweise N-Butanol, zur Verflüssigung zugesetzt wird.

11. Verwendung nach einem oder mehreren der Ansprüche 8 bis 10, dadurch gekennzeichnet, daß Methylenchlorid zugesetzt wird.

12. Verwendung nach einem oder mehreren der Ansprüche 8 bis 11, dadurch gekennzeichnet, daß das Flammschutzmittel dem Polyol im Gewichtsverhältnis Polyol zu Flammschutzmittel von 1:1,8 bis 1:2,2 zugemischt wird.

13. Verwendung nach einem oder mehreren der Ansprüche 8 bis 12, dadurch gekennzeichnet, daß das Flammschutzmittel in einer Menge von 20 bis 64 Gew.-% zugesetzt wird.

14. Verwendung nach einem oder mehreren der Ansprüche 8 bis 13, dadurch gekennzeichnet, daß aus dem Kunststoff ein Bauteil hergestellt wird, das aus einem Schaumkern (1) aus Polyurethan besteht, überwiegend geschlossene Poren (2) und Feststoffstege (3) aufweist und Oberflächenschichten (4, 5) besitzt, die ebenfalls aus Polyurethan bestehen und mit dem Kern (1) einstückig materialverbunden sind und daß die Feststoffstege (3) das Flammschutzmittel gemäß den Ansprüchen 1 bis 7 in der Struktur enthält.

15. Verwendung des Flammschutzmittels nach einem oder mehreren der Ansprüche 1 bis 6 zur Herstellung schwer entflammbarer Epoxid-Beschichtungen.

16. Verwendung nach Anspruch 15, dadurch gekennzeichnet, daß das Flammschutzmittel in Mengen von 15 bis 20 Gew.-% zugesetzt wird.

17. Verwendung des Flammschutzmittels nach einem oder mehreren der Ansprüche 1 bis 6 zur Herstellung schwer entflammbarer Latex-Beschichtungen.

18. Verwendung des Flammschutzmittels nach einem oder mehreren der Ansprüche 7 bis 17 zur Herstellung schwer entflammbarer Produkte, dadurch gekennzeichnet, daß im schwer entflammbaren Produkt Löcher eingebracht sind, die sich bis zur Oberfläche erstrecken.

19. Verwendung nach einem oder mehreren der Ansprüche 7 bis 18, dadurch gekennzeichnet, daß Keimbildner zur Initiierung der fraktionierten, endothermen Reaktionen zugesetzt werden.

20. Verwendung nach einem oder mehreren der Ansprüche 7 bis 19, dadurch gekennzeichnet, daß zur Initiierung der fraktionierten, endothermen Reaktionen mindestens ein Katalysator zugesetzt wird.

21. Verwendung nach einem oder mehreren der Ansprüche 15 bis 17, dadurch gekennzeichnet, daß pyrogene, silikonisierte Kieselsäure zugesetzt wird.

## Revendications

1. Agent retardateur de flamme, en particulier en tant qu'additif à des matières facilement ou normalement inflammables comme, par exemple, les matières synthétiques, les laques, les couleurs, les produits en latex, les produits en résine synthétique, les colles, les bois comprimés, les revêtements en époxy ou analogues, consistant en un mélange de produits chimiques, caractérisé en ce qu'il consiste en une combinaison de

  a) phosphates

  b) borax anhydre,

  c) borax hydraté, tel que du décahydrate borique, du pentahydrate borique ou acide borique, et

  d) mélamine, cyanuramide, cyanurdiamide ou dicyanamide.

2. Agent retardateur de flamme selon la revendication 1, caractérisé en ce que les quantités des composantes du mélange sont choisies de manière telle qu'il se produise une réaction endothermique fractionnée pour une large gamme de températures lorsqu'on applique de la chaleur ou de hautes températures.

3. Agent retardateur de flamme selon la revendication 2, caractérisé en ce que les réactions endothermiques fractionnées sont des réactions de fusion et/ou de décomposition et/ou de constitution de composés et/ou de constitution de cendres.

4. Agent retardateur de flamme selon l'une ou plusieurs des revendications 1 à 3, caractérisé en ce qu'il contient de l'urée carbamide.

5. Agent retardateur de flamme selon l'une ou plusieurs des revendications 1 à 4, caractérisé par la composition suivante:

  2 à 10, de préférence 5 à 8 % du poids de polyphosphate d'ammonium,

  10 à 50, de préférence 30 à 40 % du poids de monophosphate d'ammonium,

  4 à 12, de préférence 7 à 10 % du poids de borax anhydre

  12 à 40, de préférence 20 à 30 % du poids de borax

  12 à 40, de préférence 20 à 30 % du poids de mélamine

  0 à 20, de préférence 5 à 10 % d'urée carbamide.

6. Agent retardateur de flamme selon l'une ou plusieurs des revendications 1 à 5, caractérisé en ce qu'il contient de l'acide silicique pyrogène traité au silicone.

7. Utilisation de l'agent retardateur de flamme selon l'une ou plusieurs des revendications 1 à 6, pour la fabrication de matières synthétiques peu inflammables.

8. Utilisation selon la revendication 7 pour la fabrication d'une mousse de polyuréthane peu inflammable en utilisant du polyol, de l'isocyanate, un accélérateur et des produits gonflants, caractérisée en ce que le polyol est préalablement mélangé avec l'agent retardateur de flamme.

9. Utilisation selon la revendication 8, caractérisée en ce qu'on ajoute au prémélange de l'acide silicique pyrogène traité au silicone.

10. Utilisation selon la revendication 8 et/ou 9, caractérisée en ce qu'on ajoute un alcool, de préférence de l'alcool n-butylique, pour liquéfier le mélange.

11. Utilisation selon l'une ou plusieurs des revendications 8 à 10, caractérisée en ce qu'on ajoute du chlorure de méthylène.

12. Utilisation selon l'une ou plusieurs des revendications 8 à 11, caractérisée en ce que l'agent retardateur de flamme est mélangé au polyol à raison d'un pourcentage de poids polyol/agent retardateur de flamme de 1:1,8 à 1:2,2.

13. Utilisation selon l'une ou plusieurs des revendications 8 à 12, caractérisée en ce que l'agent retardateur de flamme est ajouté à raison d'un pourcentage du poids de 20 à 64%.

14. Utilisation selon l'une ou plusieurs des revendications 8 à 13, caractérisée en ce qu'on fabrique, à partir de la matière synthétique, un élément de construction consistant en un noyau en mousse (1) de polyuréthane possédant principalement des pores fermées (2) et des nervures (3) en matière solide et possédant des couches superficielles (4, 5) consistant également en polyuréthane et venues d'une pièce avec le noyau (1) et en ce que les nervures en matière solide (3) contiennent dans leur structure l'agent retardateur de flamme selon les revendications 1 à 7.

15. Utilisation de l'agent retardateur de flamme selon l'une ou plusieurs des revendications 1 à 6 pour la fabrication de revêtements en époxy peu inflammables.

16. Utilisation selon la revendication 15, caractérisée en ce que l'agent retardateur de flamme est ajouté à raison de 15 à 20% du poids.

17. Utilisation de l'agent retardateur de flamme selon l'une ou plusieurs des revendications 1 à 6 pour la fabrication de revêtements en latex peu inflammables.

18. Utilisation de l'agent retardateur de flamme selon l'une ou plusieurs des revendications 7 à 17 pour la fabrication de produits peu inflammables, caractérisée en ce que, dans le produit peu inflammable, des trous sont ménagés qui s'étendent jusqu'à la surface.

19. Utilisation selon l'une ou plusieurs des revendications 7 à 18, caractérisée en ce qu'on ajoute des agents formateurs de germes pour amorcer les réactions endothermiques fractionnées.

20. Utilisation selon l'une ou plusieurs des revendications 7 à 19, caractérisée en ce que, pour amorcer la réaction endothermique fractionnée, on ajoute au moins un catalyseur.

21. Utilisation selon l'une ou plusieurs des revendications 15 à 17, caractérisée en ce qu'on ajoute de l'acide silicique pyrogène traité au silicone.

**Claims**

1. A fire-retarding agent, in particular as an additive for highly or normally flammable substances, such as for example plastics materials, lacquers, dyes, latex products, synthetic resin products, adhesives, laminated wood, epoxide coatings or the like, comprising a mixture of chemicals, characterized in that it comprises a combination of:

  a) phosphates,

  b) anhydrous borax,

  c) aqueous borax such as borax decahydrate, borax pentahydrate or boric acid, and

d) melamin, cyanuroamide, cyanurodiamide, or dicyandiamide.

2. A fire-retarding agent according to claim 1, characterized in that the mixture is constituted in such a way in terms of its quantity that a fractionated endothermic reaction takes place in a wide temperature range under the action of heat or high temperature range under the action of heat or high temperatures.

3. A fire-retarding agent according to claim 2, characterized in that the fractionated reactions are melting and/or decomposition and/or compound-forming and/or ash-forming reactions.

4. A fire-retarding agent according to any of claims 1 to 3, characterized in that it contains urea.

5. A fire-retarding agent according to any of claims 1 to 4, characterized by the following composition:
— 2 to 10, preferably 5 to 8% by weight ammonium polyphosphate;
— 10 to 50, preferably 30 to 40% by weight monoammonium phosphate;
— 4 to 12, preferably 7 to 10% by weight borax, anhydrous;
— 12 to 40, preferably 20 to 30% by weight borax;
— 12 to 40, preferably 20 to 30% by weight melamin;
— 0 to 20, preferably 5 to 10% by weight urea.

6. A fire-retarding agent according to any of claims 1 to 5, characterized in that it contains pyrogenic, silicone-treated silicic acid.

7. The use of the fire-retarding agent according to any of claims 1 to 6 for producing scarcely flammable plastics materials.

8. The use according to claim 7 for producing scarcely flammable polyurethane foam using polyol, isocyanate, an accelerator and propellants, characterized in that polyol is mixed beforehand with the fire-retarding agent.

9. The use according to claim 8, characterized in that pyrogenic, silicone-treated silicic acid is added to the preliminary mixture.

10. The use according to either of claims 8 and 9, characterized in that an alcohol, preferably n-butanol, is added for liquefication.

11. The use according to any of claims 8 to 10, characterized in that methylene chloride is added.

12. The use according to any of claims 8 to 11, characterized in that the fire-retarding agent is mixed with the polyol in a ratio by weight of polyol to fire-retarding agent of between 1:1.8 and 1:2.2.

13. The use according to any of claims 8 to 12, characterized in that the fire-retarding agent is added in a quantity of between 20 and 64% by weight.

14. The use according to any of claims 8 to 13, characterized in that a component, which comprises a foam core (1) of polyurethane comprising mainly closed pores (2) and solid webs (3) and comprises surface layers (4, 5) which likewise consist of polyurethane and are integrally joined to the core (1), is produced from the plastics material, and the solid webs (3) contain the fire-retarding agent according to claims 1 to 7 in their structure.

15. The use of the fire-retarding agent according to any of claims 1 to 6 for producing scarcely flammable epoxide coatings.

16. The use according to claim 15, characterized in that the fire-retarding agent is used in quantities of between 15 and 20%.

17. The use of the fire-retarding agent according to any of claims 1 to 6 for producing scarcely flammable latex coatings.

18. The use of the fire-retarding agent according to one or more of claims 7 to 17 for producing scarcely flammable latex coatings, characterized in that apertures, which extend as far as the surface are formed in the scarcely flammable product.

19. The use according to one or more of claims 7 to 18, characterized in that nucleating agents for initiating the fractionated endothermic reactions are added.

20. The use according to one or more of claims 7 to 19, characterized in that at least one catalyst is added in order to initiate the fractionated endothermic reactions.

21. The use according to one or more of claims 15 to 17, characterized in that pyrogenic, silicone-treated silicic acid is added.